(19) **Europäisches Patentamt European Patent Office Office européen des brevets**

(11) **EP 1 582 904 B1**

(12) **EUROPEAN PATENT SPECIFICATION**

(45) Date of publication and mention
of the grant of the patent:
**25.06.2008 Bulletin 2008/26**

(51) Int Cl.:
***G02B 21/00*** *(2006.01)*     ***G02B 21/24*** *(2006.01)*
***G02B 21/18*** *(2006.01)*     ***G03F 7/20*** *(2006.01)*

(21) Application number: **05005645.6**

(22) Date of filing: **15.03.2005**

(54) **System microscope**

Mikroskopsystem

Système de microscope

(84) Designated Contracting States:
**DE**

(30) Priority: **30.03.2004 JP 2004098230**

(43) Date of publication of application:
**05.10.2005 Bulletin 2005/40**

(73) Proprietor: **Olympus Corporation
Shibuya-ku, Tokyo (JP)**

(72) Inventors:
• **Aono, Yasushi
Hachioji-shi,
Tokyo (JP)**
• **Nakata, Tatsuo
Hachioji-shi,
Tokyo (JP)**
• **Tsuchiya, Atsuhiro
Hachioji-shi,
Tokyo (JP)**

(74) Representative: **von Hellfeld, Axel
Wuesthoff & Wuesthoff
Patent- und Rechtsanwälte
Schweigerstrasse 2
81541 München (DE)**

(56) References cited:
WO-A-01/35151     WO-A-03/079089
DE-U1- 9 004 328     US-A- 3 259 012
US-A- 4 328 713

• **PATENT ABSTRACTS OF JAPAN vol. 2002, no. 06, 4 June 2002 (2002-06-04) -& JP 2002 055282 A (OLYMPUS OPTICAL CO LTD), 20 February 2002 (2002-02-20)**
• **PATENT ABSTRACTS OF JAPAN vol. 1999, no. 13, 30 November 1999 (1999-11-30) -& JP 11 218683 A (NIKON CORP), 10 August 1999 (1999-08-10)**
• **PATENT ABSTRACTS OF JAPAN vol. 1996, no. 11, 29 November 1996 (1996-11-29) -& JP 08 171057 A (OLYMPUS OPTICAL CO LTD), 2 July 1996 (1996-07-02)**

**Description**

The present invention relates to a system microscope.

There is an inverted microscope, which observes a sample from below. Techniques associated with a system microscope, based on an inverted microscope, which additionally includes an observation optical system which observes a sample image from above is disclosed in, for example, Jpn. Pat. Appln. KOKOKU Publication No. 5-5330 and Jpn. Pat. Appln. KOKAI Publication Nos. 10-90604 and 11-218683.

Jpn. Pat. Appln. KOKOKU Publication No. 5-5330 discloses an inverted microscope including auxiliary devices, e.g., a phase difference device such as a phase difference observation condenser lens and a differential interference device such as a differential interference condenser lens, which are rotatably provided on an illumination system column on which a light source device for the transmitting illumination of a sample. These phase difference device and differential interference device are selectively inserted in the optical axis.

Jpn. Pat. Appln. KOKAI Publication No. 10-90604 discloses an inverted microscope including a holder unit which holds a condenser on a transmitting illumination column having a light source for transmitting illumination provided on its upper portion. An objective lens is held below the holder unit.

Jpn. Pat. Appln. KOKAI Publication No. 11-218683 discloses an inverted microscope which includes a light source and condenser for transmitting illumination of a sample, which are provided on an illumination column, and also includes a beam splitting element between the light source and the condenser. This beam splitting element transmits part of illumination light from the light source, and splits part of light reflected by the sample from the illumination light path. The split reflected light is focused into a sample image.

In each of the microscopes disclosed in Jpn. Pat. Appln. KOKOKU Publication No. 5-5330 and Jpn. Pat. Appln. KOKAI Publication Nos. 10-90604 and 11-218683, the objective lens and the observation device which focuses light from the objective lens to form a sample image are provided on the vertically movable holder unit (to be referred to as a vertical motion holder unit hereafter) provided on the transmitting illumination column of the inverted microscope. Note that the objective lenses include a condenser lens used in substitution for an objective lens. For this reason, the installation space for the observation device is limited to the height of the overhang portion of the transmitting illumination column, resulting in a low degree of freedom.

In general, the vertical motion holder unit provided on the transmitting illumination column of an inverted microscope is used to position a condenser lens. Owing to this application purpose, the positioning accuracy of the vertical motion holder unit is low in the vertical direction. When a sample is to be observed with a high-power objective lens, positioning needs to be performed within a focal depth on the submicron order. It is very difficult to perform positioning within a focal depth on the submicron order by vertically moving the high-power objective lens using such a vertical motion holder. For this reason, a microscope using a vertical motion holder is only used for limited applications, resulting in poor versatility.

A microscope with high versatility is disclosed in, for example, Jpn. Pat. Appln. KOKAI Publication No. 2002-55282. Jpn. Pat. Appln. KOKAI Publication No. 2002-55282 discloses a system microscope in which an objective lens holding unit having a focusing mechanism, an illumination device; and an observation device are arranged without the transmitting illumination column of an inverted microscope. This system microscope allows an upper objective lens to be finely adjusted at a high magnification by using the focusing mechanism, and increases the degree of freedom in arranging the illumination device and observation device, thereby improving the versatility of the system.

In the microscope disclosed in Jpn. Pat. Appln. KOKAI Publication No. 2002-55282, cantilever support members are fixed to the movable side of the focusing mechanism which vertically moves the objective lens and the like, and the objective holding unit, illumination device, and observation device are provided on the cantilever support members. With this arrangement, the objective lens holding unit, illumination device, and observation device are cantilevered so as to overhang a sample. For this reason, the objective lens holding unit, illumination device, and observation device are supported with low rigidity. In addition, for example, slight vibrations are amplified by the cantilever support members, and the objective lens is greatly defocused due to the drift caused by heat.

In order to reduce such problems, Jpn. Pat. Appln. KOKAI Publication No. 2003-270537 discloses a microscope using a hollow pyramidal or conical support member as a base. According to Jpn. Pat. Appln. KOKAI Publication No. 2003-270537, the base of the microscope is the support member which has a center of gravity at a low level and is symmetrically formed in a horizontal plane, and hence is robust against deformation due to heat or the like. Since the base is integrally formed with a vibration isolation base, the base is also robust against vibrations and has high stability. The base of the microscope disclosed in Jpn. Pat. Appln. KOKAI Publication No. 2003-270537 has a closed shape, and hence it is difficult to add another device or externally access the microscope. This inevitably sacrifices the versatility and extensibility of the system.

An object of the present invention is to provide a system microscope which has high rigidity and excellent versatility and extensibility.

The above object is achieved according to the present invention by a system microscope having the features recited in claim 1. Preferred features of the invention are recited in the dependent claims.

A system microscope according to the present invention comprises a microscope body, a stage which is provided on an upper portion of the microscope body and on which a sample is placed, a lower objective lens provided below the stage, an upper objective lens provided above the stage, a portal support member which is provided on the upper portion of the microscope body so as to straddle the stage, a lower illumination device which is provided for the microscope body and illuminates the sample from below, an upper illumination device which is provided on the portal support member and illuminates the sample from above, a lower eyepiece lens which is provided for the microscope body and acquires an observation image of the sample from the lower objective lens, and an upper eyepiece lens which is provided on the portal support member and acquires an observation image of the sample from the upper objective lens.

The invention can be more fully understood from the following detailed description when taken in conjunction with the accompanying drawings, in which:

FIG. 1 is a side view of the arrangement of a system microscope according to the first embodiment of the present invention;

FIG. 2 is a front view of the system microscope shown in FIG. 1;

FIG. 3 is a view showing a comparison between the structure of the portal support member of the system microscope shown in FIG. 1 and the conventional cantilever structure;

FIG. 4 is a side view of a system microscope obtained by adding a second upper illumination device and an intermediate observation lens barrel to the system microscope shown in FIG. 1;

FIG. 5 is a front view of the system microscope shown in FIG. 4;

FIG. 6 is a view showing the arrangement of a modification of the system microscope shown in FIG. 1;

FIG. 7 is a view showing the arrangement of a modification of the system microscope shown in FIG. 1;

FIG. 8 is a view showing the arrangement of a system microscope according to the second embodiment of the present invention;

FIG. 9 is a side view showing the arrangement of a system microscope according to the third embodiment of the present invention;

FIG. 10 is a front view of the system microscope shown in FIG. 9;

FIG. 11 is a view showing the arrangement of a modification of the system microscope shown in FIG. 9;

FIG. 12 is a view showing the arrangement of another modification of the system microscope shown in FIG. 9;

FIG. 13 is a side view showing the arrangement of a system microscope according to the fourth embodiment of the present invention;

FIG. 14 is a front view of the system microscope shown in FIG. 13;

FIG. 15 is a view showing the arrangement of a modification of the system microscope shown in FIG. 13;

FIG. 16 is a view showing the arrangement of another modification of the system microscope shown in FIG. 13;

FIG. 17 is a view showing the arrangement of a portal support member in the system microscope according to the fourth embodiment of the present invention; and

FIG. 18 is a view showing the function of the system microscope shown in FIG. 17.

The first embodiment of the present invention will be described below with reference to the views of the accompanying drawing.

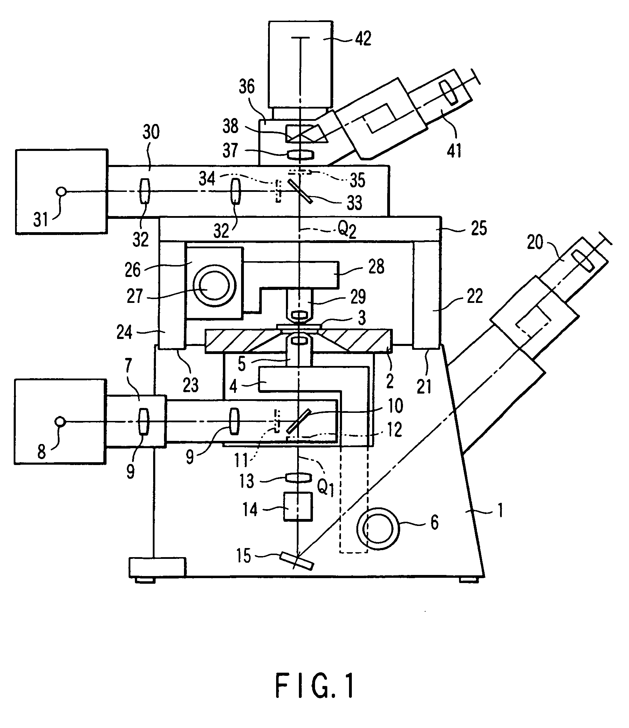

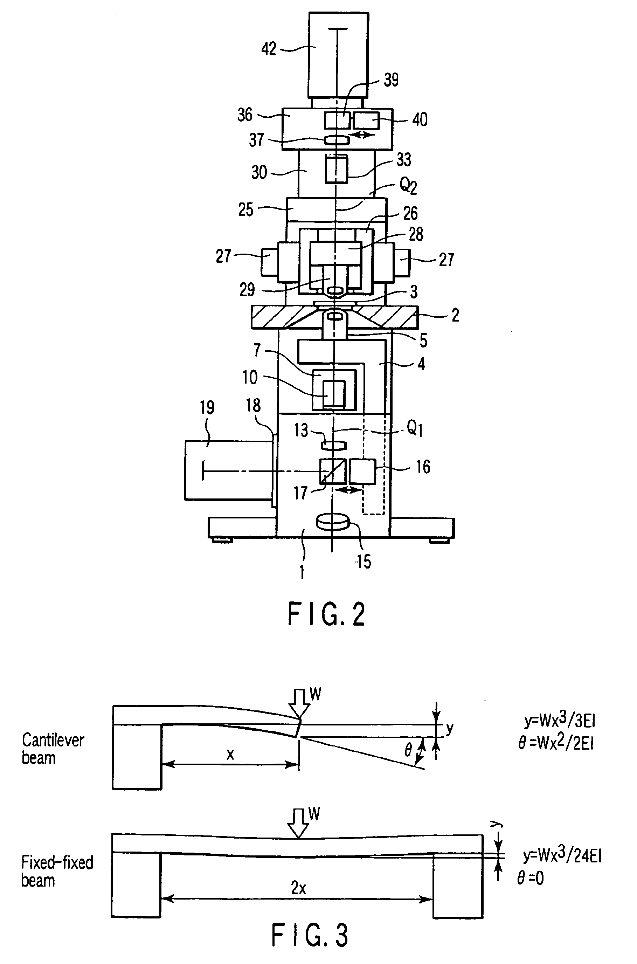

FIG. 1 is a side view of a system microscope according to this embodiment. FIG. 2 is a front view of the microscope shown in FIG. 1. A stage 2 is fixed on the upper portion of an inverted microscope body 1. A sample 3 is placed on the stage 2.

The inverted microscope body 1 is provided with a lower objective lens holding unit 4. A lower objective lens 5 is mounted on the lower objective lens holding unit 4. The lower objective lens holding unit 4 is connected to a lower focusing knob 6 through a rack-and-pinion mechanism (not shown) in the inverted microscope body 1. The rotation of the lower focusing knob 6 is converted into vertical movement through the rack-and-pinion mechanism and transferred to the lower objective lens holding unit 4. With this operation, the lower objective lens 5 is vertically moved along an optical axis $Q_1$.

A lower illumination device 7 is fixed to the inverted microscope body 1. The lower illumination device 7 has a lower light source 8, which outputs illumination light. A lower illumination optical system 9 and a lower illumination reflecting member 10 are provided on the optical path of the illumination light output from the lower light source 8. The lower illumination optical system 9, which has lenses, conveys the illumination light output from the lower illumination device 7 to the lower illumination reflecting member 10. The lower illumination reflecting member 10 is placed at the intersection of the optical path of the illumination light output from the lower illumination device 7 and the optical axis $Q_1$ of the lower objective lens 5. The lower illumination reflecting member 10 reflects along the optical axis $Q_1$ of the lower objective lens 5 the illumination light conveyed by the lower illumination optical system 9, and transmits light from the lower objective lens 5. As the lower illumination reflecting member 10, for example, a total reflection mirror, a half mirror, or a dichroic mirror is used in accordance with the application purpose. When a dichroic mirror is to be used, an excitation filter 11 and absorption filter 12 are arranged on the optical path, as indicated by the phantom lines.

A lower imaging lens 13, a lower observation optical path switching member 14, and a return mirror 15 are provided on the optical axis $Q_1$ below the lower illumination reflecting member 10. As shown in FIG. 2, the lower observation optical path switching member 14 selectively sets a lower observation optical path switching member 16 or a lower observation optical path switching member 17 on the observation optical path (optical axis $Q_1$). The lower observation optical path switching member 16 transmits approximately 100% of observation light from the sample 3. The lower observation optical path switching member 17 reflects approximately 100% or part of observation light from the sample 3 toward a side port 18 formed in a side surface of the inverted microscope body 1. A lower observation device 19 is mounted in the side port 18. The lower observation device 19, which is for image-sensing incident observation light from the sample 3, has an image sensing device such as a CCD. The return mirror 15 reflects the observation light that has passed through the lower imaging lens 13 and lower observation optical path switching member 14 in an upper oblique direction on the front surface side of the system microscope. The return mirror 15 is fixed to the bottom surface of the inverted microscope body 1 at a slant. A lower eyepiece lens 20 is provided on the path of light reflected by the return mirror 15.

The illumination light output from the lower light source 8 is therefore conveyed by the lower illumination optical system 9, reflected by the lower illumination reflecting member 10 toward the lower objective lens 5 placed thereabove, and applied to the sample 3 through the lower objective lens 5.

The observation light from the sample 3 is collimated by the lower objective lens 5, passes through the lower imaging lens 13, and then enters the lower observation optical path switching member 14. The observation light reflected by the lower observation optical path switching member 14 enters the lower observation device 19 fixed to the side port 18 and is image-sensed by the lower observation device 19. The observation light transmitted through the lower observation optical path switching member 14 is reflected by the return mirror 15 fixed to the bottom surface of the inverted microscope body 1, and passes through the lower eyepiece lens 20 to be observed by an observer.

A front mount portion 21 is provided on the front surface side on the inverted microscope body 1. A front support leg 22 vertically stands on the front mount portion 21. The front support leg 22 is formed into a flat plate.

A rear mount portion 23 is provided on the rear surface side on the inverted microscope body 1. A rear support leg 24 vertically stands on the rear mount portion 23. The rear support leg 24 is formed into a flat plate.

A horizontal member 25 is horizontally supported and fixed on the upper portions of the front support leg 22 and rear support leg 24. The horizontal member 25 is formed into a flat plate. Note that an opening portion through which observation light passes is formed in that portion of the horizontal member 25 through which an optical axis $Q_2$ of an upper objective lens 29 passes.

The front support leg 22, rear support leg 24, and horizontal member 25 constitute a portal support member as an integral rigid body in a shape straddling the stage 2.

An upper focusing unit 26 is provided in the rear support leg 24. The upper focusing unit 26 incorporates a rack-and-pinion mechanism (not shown), and an upper focusing knob 27 is connected to the rack-and-pinion mechanism. An upper objective lens holding unit 28 is connected to the rack-and-pinion mechanism. The upper objective lens 29 is mounted on the lower surface of the upper objective lens holding unit 28. The upper focusing unit 26 therefore vertically moves the upper objective lens holding unit 28 along the optical axis $Q_2$ through the rack-and-pinion mechanism in accordance with rotation of the upper focusing knob 27.

An upper illumination device 30 is mounted and fixed on the upper surface of the horizontal member 25. One end portion of the upper illumination device 30 is provided with an upper light source 31 which outputs illumination light. The upper illumination device 30, which is for conveying the illumination light output from the upper light source 31, has an upper illumination optical system 32 comprising an optical lens and the like and an upper illumination reflecting member 33. The upper illumination reflecting member 33 reflects downward along the optical axis $Q_2$ the illumination light output from the upper light source 31, and transmits the observation light of the sample 3 from the upper objective lens 29. As the upper illumination reflecting member 33, for example, a total reflection mirror, a half mirror, or a dichroic mirror is used in accordance with the application purpose. When a dichroic mirror is to be used, an excitation filter 34 and absorption filter 35 are provided on the optical path, as indicated by the phantom lines.

A trinocular lens barrel 36 is mounted and fixed on the upper surface of the upper illumination device 30. In the trinocular lens barrel 36, an upper imaging lens 37 and upper observation optical path switching member 38 are provided on the optical axis $Q_2$. As shown in FIG. 2, the upper observation optical path switching member 38 selectively sets an upper observation optical path switching member 39 or an upper observation optical path switching member 40 on the observation optical path (optical axis $Q_2$). The upper observation optical path switching member 39 reflects approximately 100% of observation light from the sample 3 toward an upper eyepiece lens 41. The upper observation optical path switching member 40 transmits approximately 100% or part of observation light from the sample 3 toward an upper observation device 42. The upper observation device 42 is mounted and fixed on the upper surface of the trinocular lens barrel 36. The upper observation device 42, which is for image-sensing incident observation light from the sample 3, has an image sensing device such as a CCD.

The illumination light output from the upper light source 31 is conveyed through the upper illumination optical system 32, reflected by the upper illumination reflecting member 33 toward the upper objective lens 29 located therebelow, and applied to the sample 3 through the upper objective lens 29.

The observation light from the sample 3 is collimated by the upper objective lens 29, passes through the upper imaging lens 37, and enters the upper observation optical path switching member 38. The observation light reflected by the upper observation optical path switching member 38 is observed by the observer through the upper eyepiece lens 41. The observation light transmitted through the upper observation optical path switching member 38 is image-sensed by the upper observation device 42 fixed to the trinocular lens barrel 36.

The function of the system microscope having the above arrangement will be described next.

The upper illumination device 30, trinocular lens barrel 36, upper eyepiece lens 41, and upper observation device 42 are mounted and fixed on the horizontal member 25. The total sum of the weights of the respective mounted/ fixed members is loaded on the horizontal member 25.

The horizontal member 25, front support leg 22, and rear support leg 24 constitute a portal support member as an integral rigid body. The portal support member is fixed to the front mount portion 21 and rear mount portion 23 on the inverted microscope body 1. With this arrangement, the portal support member forms a fixed-fixed structure which is fixed to the front and rear portions of the inverted microscope body 1 as a whole.

A form of flexure caused when a load is applied to such a portal support member will be compared with a conventional cantilever structure which is generally used. FIG. 3 shows a comparison between the structure of the portal support member of the present invention and the structure of the conventional cantilever structure. For the sake of descriptive convenience, FIG. 3 shows a prior art as a model approximated to a state wherein a concentrated load is applied to the distal end of a cantilever beam, and a the present invention as a model approximated to a state wherein a concentrated load is applied to the middle of a fixed-fixed beam. Letting W(N) be a concentrated load, and $x$ (mm) be the distance from a fixed end to the load point, which are common conditions, a flexure $y$ (mm) at the load point and a flexure angle θ (rad) are calculated by

in the case of the cantilever beam:

$$y = W \cdot x^3 / 3E \cdot I, \quad \theta = W \cdot x^2 / 2E \cdot I \quad \ldots (1),$$

in the case of the fixed-fixed beam:

$$y = W \cdot x^3 / 24E \cdot I, \quad \theta = 0 \quad \ldots (2),$$

where E is the Young's modulus (N/mm$^2$) depending on a material for a beam, and I is the geometrical moment of inertia (mm$^4$) depending on the cross-sectional shape of the beam.

When, therefore, a cantilever beam and a fixed-fixed beam which are made of the same material and have the same cross-sectional shape are compared with each other, the flexure of the fixed-fixed beam can be suppressed to 1/8 that of the cantilever beam. The flexure angle θ of the fixed-fixed beam becomes 0 at the middle of the beam, i.e., the load point. Although this calculation result is approximate, it can be considered that the beam in an actual form exhibits a similar behavior. That is, the portal support member according to the present invention has much higher rigidity than the conventional form.

As described above, according to the first embodiment, the front support leg 22, rear support leg 24, and horizontal member 25 constitute the portal support member as an integral rigid body. This portal support member is fixed on the inverted microscope body 1. The upper illumination device 30, trinocular lens barrel 36, upper eyepiece lens 41, and upper observation device 42 can be mounted and fixed, with high rigidity, on the portal support member. In addition, the rear support leg 24, upper objective lens 29, upper objective lens holding unit 28, and upper focusing unit 26 can be mounted, with high rigidity, on the rear support leg 24. The system microscope of this embodiment is therefore robust against vibrations and has high stability.

Since the portal support member comprising the front support leg 22, rear support leg 24, and horizontal member 25 is only fixed on the front mount portion 21 and rear mount portion 23 on the inverted microscope body 1, the portal support member can be easily mounted on a generally used existing inverted microscope by only providing mount portions on the front and rear sides of the microscope, thereby realizing the system microscope according to this embodiment. This system microscope can be provided at a low cost without requiring any special structure.

Since the front support leg 22 and rear support leg 24 of the portal support member stand vertically on the front and rear sides of the inverted microscope body 1, respectively, almost unrestricted spaces are ensured on the left and right side surfaces of the inverted microscope body 1. This makes it easy to access, e.g., manipulate, the sample 3 from either the left side or the right side of the inverted microscope body 1.

Since there is no spatial restriction above the horizontal member 25 either, observation devices each having an eyepiece lens and an image sensing device such as a CCD can be easily added to the system, thus ensuring excellent versatility and extensibility of the system.

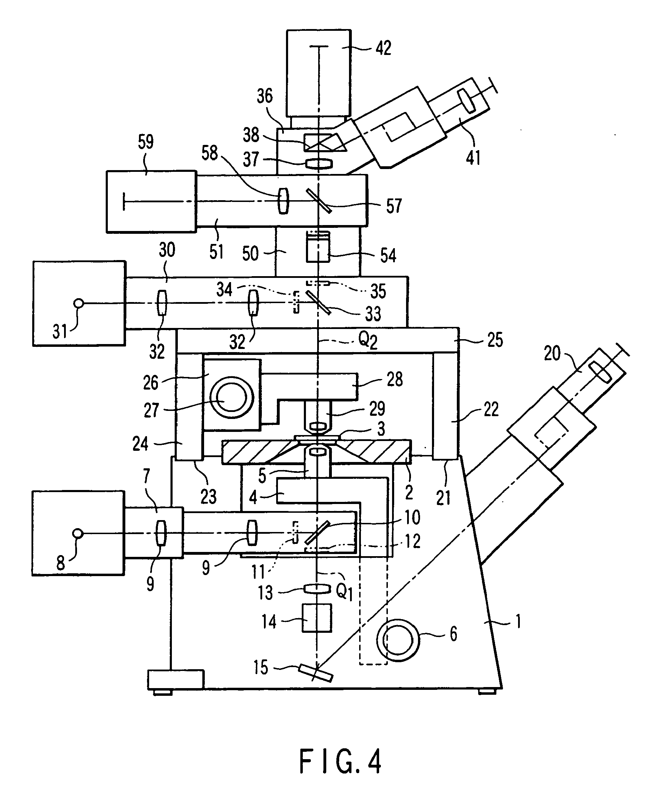

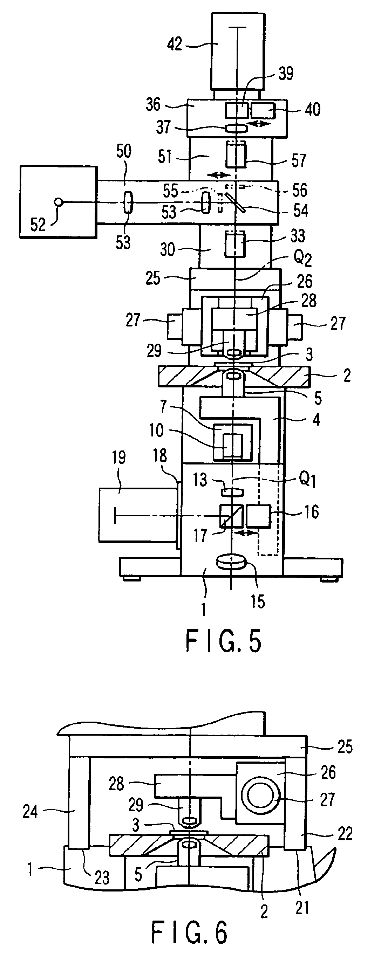

FIG. 4 is a side view of a system microscope obtained by adding a second upper illumination device 50 and intermediate observation lens barrel 51 to the system microscope shown in FIG. 1. FIG. 5 is a front view of the microscope shown in FIG. 4. Note that the same reference numerals as in FIGS. 1 and 2 denote the same parts in FIGS. 4 and 5, and a detailed description thereof will be omitted.

The second upper illumination device 50 is mounted and fixed on the upper illumination device 30. The second upper illumination device 50 has a second upper light source 52 which outputs illumination light. The second upper illumination device 50 has a second upper illumination optical system 53 comprising an optical lens and the like and a second upper illumination reflecting member 54. The second upper illumination reflecting member 54 reflects downward along the optical axis $Q_2$ the illumination light output from the second upper light source 52 and conveyed through the second upper illumination optical system 53, and transmits observation light from the sample 3. As the second upper illumination reflecting member 54, for example, a total reflection mirror, a half mirror, or a dichroic mirror is used in accordance with the application purpose. When a dichroic mirror is to be used, an excitation filter 55 and absorption filter 56 are arranged on the optical path, as indicated by the phantom lines in FIG. 5.

The intermediate observation lens barrel 51 is mounted and fixed on the second upper illumination device 50. The intermediate observation lens barrel 51 incorporates a second upper observation optical path switching member 57 and second upper imaging lens 58. The second upper observation optical path switching member 57 is inserted into or removed from the optical path as needed. When the second upper observation optical path switching member 57 is removed from the optical path, observation light from the sample 3 travels straight and enters the trinocular lens barrel 36. An end portion of the intermediate observation lens barrel 51 is provided with a second upper observation device 59 having an image sensing device such as a CCD.

The illumination light output from the second upper light source 52 is conveyed through the second upper illumination optical system 53, reflected by the second upper illumination reflecting member 54 toward the upper objective lens 29 located therebelow, and applied to the sample 3 through the upper objective lens 29.

Observation light from the sample 3 is collimated by the upper objective lens 29, reflected by the second upper observation optical path switching member 57, and passes through the second upper imaging lens 58 to be image-sensed by the second upper illumination device 50.

In this manner, an arbitrary combination of illumination devices and observation devices can be mounted and fixed on the horizontal member 25. Even if the total sum of the weights of these illumination devices and observation devices becomes large, since the integral rigid body comprising the front support leg 22, rear support leg 24, and horizontal member 25 has high rigidity, the overall stability of the system microscope can be maintained.

In the first embodiment, the upper focusing unit 26 is fixed to the rear support leg 24. However, for example, the upper focusing unit 26 may be fixed to the front support leg 22, as shown in FIG. 6. In this case, since the upper focusing unit 26 is placed on the front side of the inverted microscope body 1 (the front side of the observer), an arrangement with excellent operability can be realized for the observer.

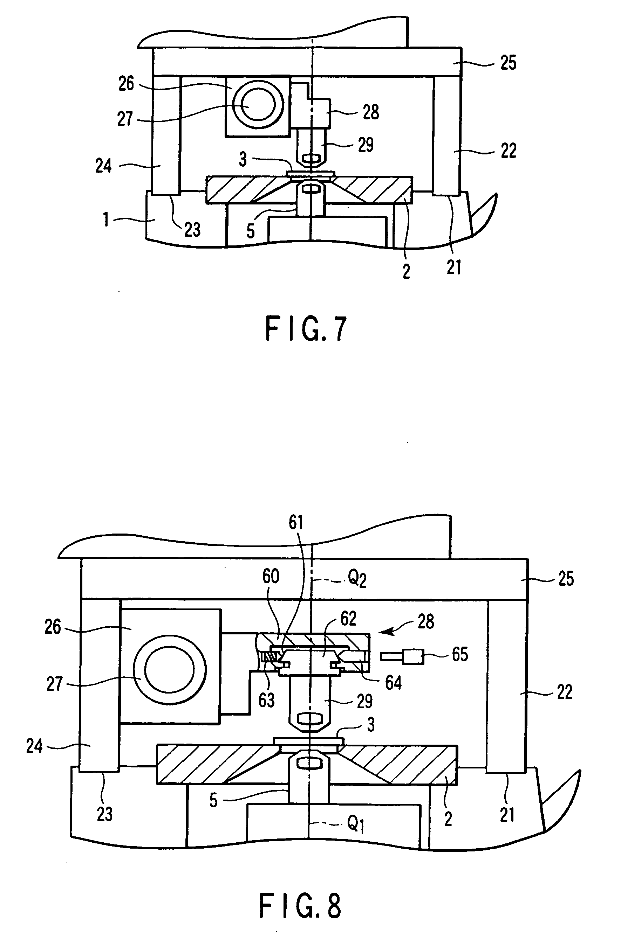

As shown in FIG. 7, the upper focusing unit 26 may also be fixed on the lower surface of the horizontal member 25. In this case, the upper objective lens holding unit 28 can be reduced in length, so that the distance from the holding position by the upper focusing unit 26 to the holding position of the upper objective lens 29 can be shortened. Shortening this distance is equivalent to reducing the value of a distance $\underline{x}$ from a fixed end to a load point in the equation (1) in a case wherein the holding position of the upper objective lens 29 is regarded as the load point on the distal end of the conventional cantilever beam. Since the flexure $\underline{y}$ and flexure angle θ can be reduced, the rigidity of the upper objective lens holding unit 28 can be increased.

The second embodiment of the present invention will be described next with reference to the views of the accompanying drawing. Note that the same reference numerals as in FIGS. 1 and 2 denote the same parts in the second embodiment, and a detailed description thereof will be omitted.

FIG. 8 is an enlarged view showing the details of a portion near a sample 3 in a system microscope according to this embodiment. An upper objective lens holding unit 28 has an upper objective lens holding unit body 60. A mount hole 61 is formed in the upper objective lens holding unit body 60 on the lower surface. An objective lens fixing unit 62 on which an upper objective lens 29 is detachably mounted is provided in the mount hole 61. A side surface of the mount hole 61 is provided with a spring 63 and two adjusting screws 64 (only one is shown in FIG. 8). With this arrangement, the objective lens fixing unit 62 is supported at three points in the mount hole 61 by the spring 63 and the two adjusting screws 64.

When the two adjusting screws 64 are moved back and forth by using a tool 65, the objective lens fixing unit 62 moves together with the upper objective lens 29 in a plane perpendicular to an optical axis $Q_2$. As a consequence, the holding position of the objective lens fixing unit 62 shifts with respect to the upper objective lens holding unit body 60. That is, the upper objective lens holding unit body 60, objective lens fixing unit 62, spring 63, and adjusting screws 64 constitute a transverse shifting mechanism which transversely shifts the upper objective lens 29 in a plane perpendicular to the optical axis $Q_2$.

The function of the system microscope having the above arrangement will be described next.

Illumination light illuminated on a sample 3 through a lower objective lens 5 is illuminated within an almost circular range almost centered on an optical axis $Q_1$ of the lower objective lens 5. Observation light from the sample 3 is observed within an almost circular range almost centered on the optical axis $Q_1$.

When the holding position of the upper objective lens 29 with respect to the upper objective lens holding unit body 60 is shifted in a plane perpendicular to an optical axis $Q_2$, the optical axis position of the upper objective lens 29 shifts relative to the optical axis $Q_1$ of the lower objective lens 5. As a consequence, the illumination range and observation range on the sample 3 which are defined by the lower objective lens 5 shift relative to the illumination range and observation range on the sample 3 which are defined by the upper objective lens 29.

As described above, according to the second embodiment, the optical axis $Q_2$ of the upper objective lens 29 can be shifted relative to the optical axis $Q_1$ of the lower objective lens 5. This makes it possible to perform illumination and observation in different ranges on the sample 3 by using the lower objective lens 5 and upper objective lens 29.

Accurately matching the optical axis $Q_1$ of the lower objective lens 5 to the optical axis $Q_2$ of the upper objective lens 29 by adjusting the position of the upper objective lens 29 can match the illumination and observation ranges on the sample 3 by the lower objective lens 5 to those by the upper objective lens 29.

In this manner, the relative positions of the lower objective lens 5 and upper objective lens 29 can be arbitrarily set in accordance with the application purpose.

Note that in this embodiment, the optical axis $Q_2$ of the upper objective lens 29 is shifted. Obviously, however, the position of the optical axis $Q_1$ of the lower objective lens 5 may be shifted.

The third embodiment of the present invention will be described next with reference to the views of the accompanying drawing. Note that the same reference numerals as in FIGS. 1 and 2 denote the same parts in the third embodiment, and a detailed description thereof will be omitted.

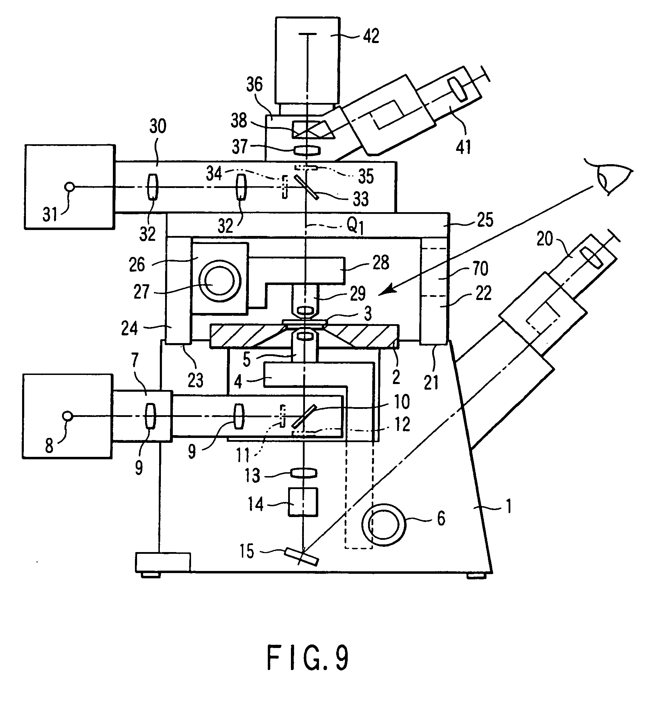

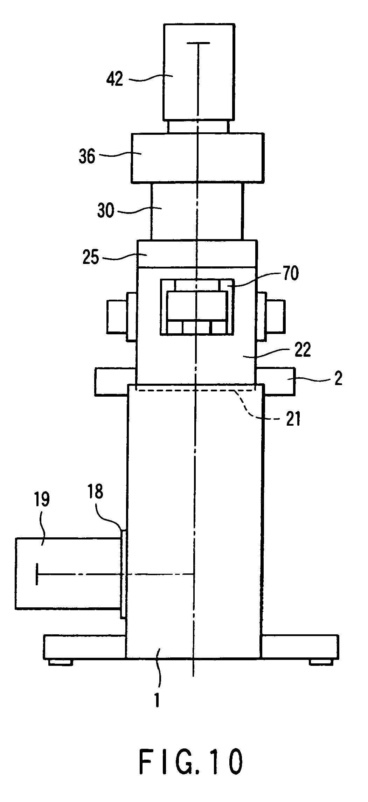

FIG. 9 is a side view of a system microscope according to this embodiment. FIG. 10 is a front view of the microscope shown in FIG. 9. A sight hole (sight window) 70 is provided in a front support leg 22. The sight hole 70 is provided to allow an observer to visually observe a sample 3 placed on a stage 2 from the front surface side of an inverted microscope body 1.

According to the third embodiment, the observer can check the sample 3 placed on the stage 2 by visually observing it through the sight hole 70, visibility for removing or operating the sample 3 placed on the stage can be ensured.

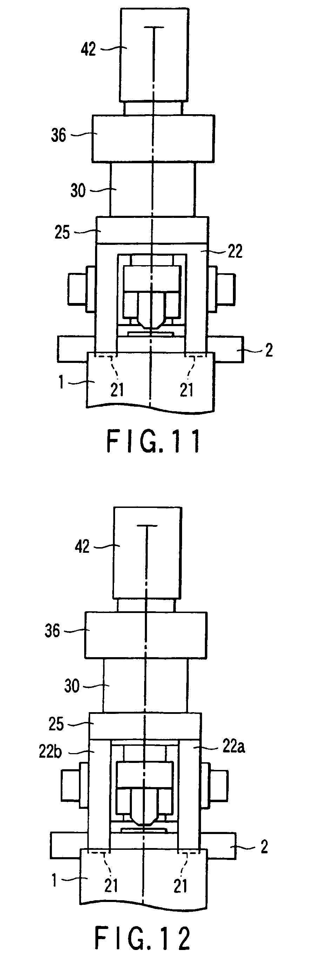

The third embodiment ensures visibility by providing the front support leg 22 with the sight hole 70. However, for example, the front support leg 22 may be formed into a bifurcated structure as shown in FIG. 11 or may comprise at least two rod-like legs 22a and 22b. Even if the shape of the front support leg 22 is arbitrarily changed in this manner within the range in which the rigidity is not considerably decreased, the same effects as those described above can be obtained.

The fourth embodiment of the present invention will be described next with reference to the views of the accompanying drawing. Note that the same reference numerals as in FIGS. 1 and 2 denote the same parts in the fourth embodiment, and a detailed description thereof will be omitted.

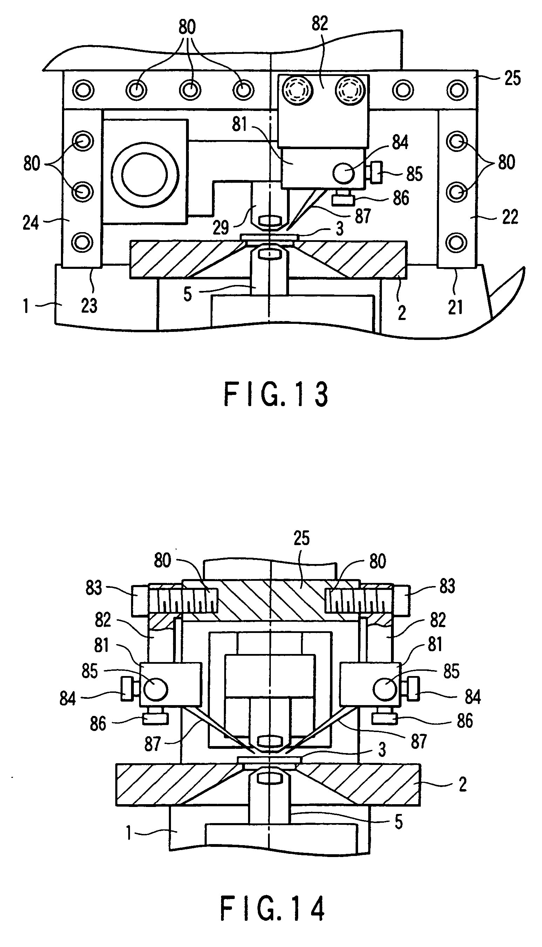

FIG. 13 is a side view of a system microscope according to this embodiment. FIG. 14 is a front view of the microscope shown in FIG. 13. Female threads 80 are provided in side surfaces of a front support leg 22, a rear support leg 24, and a horizontal member 25. The female threads 80 constitute a fastening structure for mounting various kinds of equipment such as a manipulator 81. Grip members 82 are fixed to the female threads 80 at arbitrary position with screws 83. The manipulator 81 is held and fixed on the grip member 82. Note that various kinds of equipment include, for example, a device which supplies various types of solutions to the sample 3 and an illumination device in addition to the manipulator 81.

The manipulator 81 has an X-axis driving knob 84, a Y-axis driving knob 85, and a Z-axis driving knob 86. By manipulating the X-axis driving knob 84, Y-axis driving knob 85, and Z-axis driving knob 86, a probe 87 is made to access into a three-dimensional space containing the sample 3, thereby performing manipulation.

As described above, according to the fourth embodiment, the front support leg 22, rear support leg 24, and horizontal member 25 constituting the portal support member are provided with the female threads 80, and the grip members 82 are fixed to the female threads 80 at arbitrary positions, thereby holding the manipulators 81. The portal support member to which the grip members 82 are fixed has high rigidity, and the total length of each grip member 82 can be made smaller than in a case wherein a sample 3 is accessed from outside the microscope. This makes it possible to form a system which can hold the manipulators 81 with high rigidity and is robust against the influences of vibrations and the like.

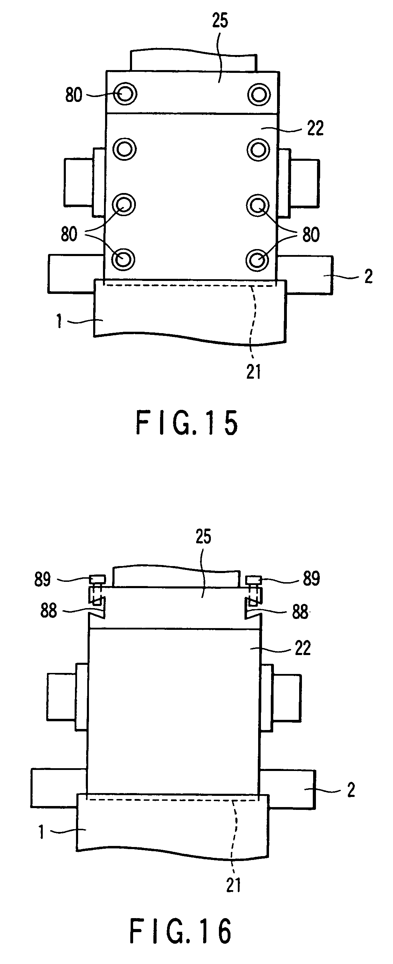

In the fourth embodiment, the female threads 80 are provided in the side surfaces of the front support leg 22, rear support leg 24, and horizontal member 25. However, as shown in FIG. 15, the female threads 80 may be provided at any positions other than the side surfaces, i.e., any faces of the front support leg 22, rear support leg 24, and horizontal member 25, within the range in which the rigidity is not considerably decreased.

Even if the fastening structure uses slide dovetails 88 and set screws 89 in place of the female threads 80 and screws 83 as shown in FIG. 16, the same effects as those described above can be obtained.

The fifth embodiment of the present invention will be described next with reference to the views of the accompanying drawing. Note that the same reference numerals as in FIGS. 1 and 2 denote the same parts in the fifth embodiment, and a detailed description thereof will be omitted.

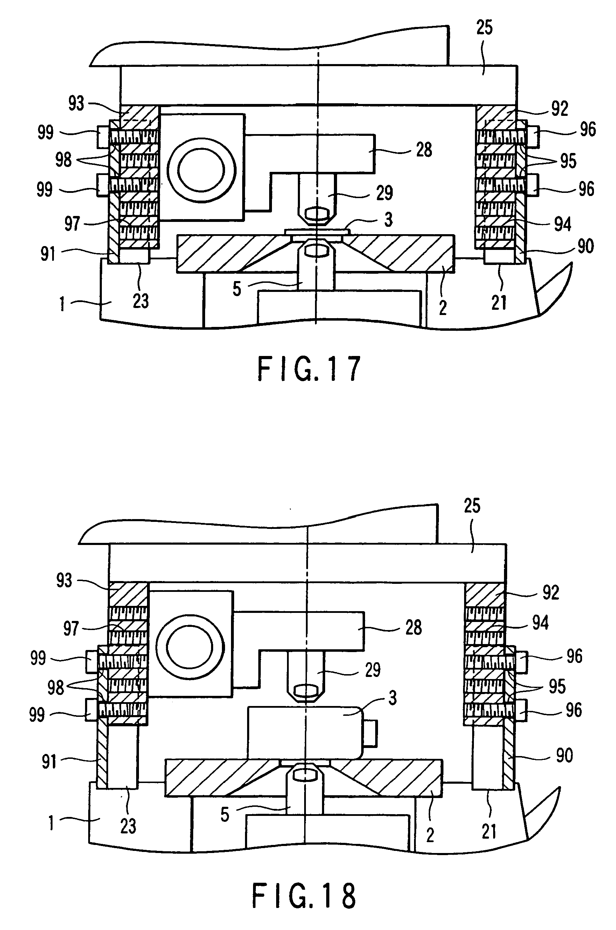

FIG. 17 is a view showing the arrangement of the portal support member of a system microscope according to this embodiment. A front support leg lower portion 90 vertically stands and is fixed on a front mount portion 21 of an inverted microscope body 1. A rear support leg lower portion 91 vertically stands and is fixed on a rear mount portion 23 of the inverted microscope body 1.

A front support leg upper portion 92 and a rear support leg upper portion 93 are fixed on the front and rear sides of the lower surface of a horizontal member 25. The front support leg upper portion 92 and rear support leg upper portion 93 vertically extend downward from the lower surface of the horizontal member 25.

The front support leg upper portion 92 is provided with female threads 94 at equal intervals in the vertical direction. The front support leg lower portion 90 is provided with holes 95 at intervals equal to multiples of the intervals of the female threads 94. Therefore, the front support leg lower portion 90 and front support leg upper portion 92 are fastened and fixed to each other by fastening screws 96 into the holes 95 and female threads 94. That is, the screws 96, holes 95, and female threads 94 constitute a fastening mechanism which fastens the front support leg lower portion 90 and front support leg upper portion 92 so as to allow a change in vertical positional relationship.

The rear support leg upper portion 93 is provided with female threads 97 at equal intervals in the vertical direction. The rear support leg lower portion 91 is provided with holes 98 at intervals equal to multiples of the intervals of the female threads 97. Therefore, the rear support leg lower portion 91 and rear support leg upper portion 93 are fastened and fixed to each other by fastening screws 99 into the holes 98 and female threads 97. That is, the screws 99, holes 98, and female threads 97 constitute a fastening mechanism which fastens the rear support leg lower portion 91 and rear support leg upper portion 93 so as to allow a change in vertical positional relationship.

According to the fifth embodiment, as shown in FIG. 18, if, for example, the sample 3 is larger and the upper objective lens 29 needs to be moved upward, the screws 96 and 99 are unfastened. With this operation, the front support leg upper portion 92, rear support leg upper portion 93, and horizontal member 25 are lifted and moved upward together to raise the height position of the horizontal member 25. The height by which the front support leg upper portion 92, rear support leg upper portion 93, and horizontal member 25 are lifted can be arbitrarily determined by multiples of the intervals of the female threads 94 and 97 in the vertical direction. Thereafter, the screws 96 and 99 are fastened again to fix again the front support leg upper portion 92 and rear support leg upper portion 93 to the front support leg lower portion 90 and rear support leg lower portion 91, respectively.

As described above, according to the fifth embodiment, the height of the space surrounded by the portal support member on a stage 2 can be changed. With this operation, when the large sample 3 is to be observed or the height position of the sample 3 placed on the stage 2 is to be raised, a change like moving an upper objective lens 29 upward can be made in accordance with the operation state of the microscope.

Note that the present invention is not limited to each embodiment described above, and can be variously modified.

For example, the system microscope described above comprises the lower illumination device 7, upper illumination device 30, lower observation device 19, upper observation device 42, lower eyepiece lens 20, upper eyepiece lens 41, and the like. However, the microscope may include only the components of an inverted microscope, e.g., the lower illumination device 7, lower observation device 19, and lower eyepiece lens 20. Alternatively, the microscope may include only the components of an upright microscope, e.g., the upper illumination device 30, upper observation device 42, and upper eyepiece lens 41.

The front support leg 22 and rear support leg 24 which constitute the portal support member may have a hollow pipe-like structure, or may use high-strength rod-like members having a T- or H-shaped cross-section. When these rod-like members are to be used, for example, at least three rod-like members may be provided at three positions on the upper portion of the inverted microscope body 1, or the four rod-like members may be provided at the four corner portions of the upper portion of the inverted microscope body 1. Alternatively, many rod-like members may be arranged.

As a material for the front support leg 22, rear support leg 24, and horizontal member 25 constituting the portal support member, for example, the same material as that for another member of the system microscope, e.g., the material for the inverted microscope body 1, is generally used. However, a material higher in strength than that for the inverted microscope body 1 may be used.

In order to increase the rigidity of the portal support member, at least one beam may be provided between the front support leg 22 and the rear support leg 24.

In the first embodiment, an arbitrary combination of illumination devices and observation devices is mounted and fixed on the horizontal member 25. However, this technique of mounting illumination devices and observation devices on the horizontal member 25 can also be applied to the second to fifth embodiments.

The technique of fixing the upper focusing unit 26 to the lower surface of the rear support leg 24, front support leg 22, or horizontal member 25 as in the first embodiment can be applied to the second to fifth embodiments.

The technique of shifting the optical axis $Q_2$ of the upper objective lens 29 relative to the optical axis $Q_1$ of the lower objective lens 5 as in the second embodiment can also be applied to the third to fifth embodiments.

The technique of providing the sight hole 70 as in the third embodiment can also be applied to the second, fourth, and fifth embodiments.

The technique of providing the female threads 80 for the front support leg 22, rear support leg 24, and horizontal member 25 constituting the portal support member and holding the manipulators 81 by fixing the grip members 82 in the female threads 80 at arbitrary positions as in the fourth embodiment can also be applied to the second, third, and fifth embodiments.

The technique of changing the height of the portal support member by using the fastening member as in the fifth embodiment can also be applied to the third and fourth embodiments.

**Claims**

1. A system microscope comprising:

   a microscope body (1);
   a stage (2) which is provided on an upper portion of the microscope body (1) and on which a sample (3) is placed;
   a lower objective lens (5) provided below the stage (2) for the microscope body (1);
   a lower illumination device (7) which is provided for the microscope body (1) and illuminates the sample (3) from below; and
   a lower eyepiece lens (20) which is provided for the microscope body (1) and acquires an observation image of the sample (3) from the lower objective lens (5), further comprising:

   a portal support member (22, 24, 25) which is provided on the upper portion of the microscope body (1) so as to straddle the stage (2);
   an upper objective lens (29) provided on the portal support member above the stage (2);
   an upper illumination device (30, 50) which is provided on the portal support member and illuminates the sample (3) from above; and
   an upper eyepiece lens (41) which is provided on the portal support member and acquires an observation image of the sample (3) from the upper objective lens (29) which is provided on the portal support member via an upper focusing unit (26), **characterized in that** the portal support member (22, 24, 25) adjustably fixes the vertical distance of the upper objective lens (29), the upper illumination device (30, 50) and the upper eyepiece lens (41) to the stage (2).

2. A microscope according to claim 1, **characterized in that** the portal support member has at least two first members (90, 92; 91, 93) which vertically stand on the microscope body (1) and a second member provided between the first members, each of the two first member (90, 92; 91, 93) being adjustable in length.

3. A microscope according to claim 2, **characterized in that** the first members have front and rear support legs which respectively include front support leg lower and upper portions (90; 92) at a front side of the microscope body (1) and rear support leg lower and upper portions (91; 93) at a rear side of the microscope body (1), the second member has a horizontal member (25) horizontally fixed between the front and rear support leg upper portions (92; 93), and the support legs are adjustable in lengths between the front support leg lower and upper portions (90; 92) and between the rear support leg lower and upper portions (91; 93), respectively.

4. A microscope according to claim 3, **characterized in that** each of the support leg lower portions (90; 91) and support leg upper portions (92; 93) and the horizontal member (25) comprises a flat plate.

5. A microscope according to claim 1, **characterized in that** by the microscope further comprises at least one observation device (42) which senses an observation image of the sample (3) from the upper objective lens (29), and the upper illumination device (30, 50), the upper eyepiece lens (41), and the observation device (42) are provided on the portal support member.

6.  A microscope according to claim 5, **characterized in that** the upper illumination device (30, 50), the upper eyepiece lens (41), and the observation device (42) can be mounted on the portal support member and dismounted from the portal support member.

7.  A microscope according to claim 3, **characterized by** further comprising a focusing unit (26) which moves the upper objective lens (29) along an optical axis, the focusing unit (26) being provided on the front support leg upper portion (92).

8.  A microscope according to claim 3, **characterized by** further comprising a focusing unit (26) which moves the upper objective lens (29) along an optical axis, the focusing unit (26) being provided on the rear support leg upper portion (93).

9.  A microscope according to claim 3, **characterized by** further comprising a focusing unit (26) which moves the upper objective lens (29) along an optical axis, the focusing unit (26) being provided on a lower surface of the horizontal member (25).

10.  A microscope according to claim 1, **characterized by** further comprising at least one transverse shifting mechanism (60, 62, 63, 64) which transversely shifts one of the lower objective lens (5) and the upper objective lens (29) in a plane perpendicular to an optical axis of the objective lens to be moved.

11.  A microscope according to claim 4, **characterized in that** the support leg (22) provided on the front side of the microscope body (1) has a sight window (70).

12.  A microscope according to claim 3, **characterized in that** the support leg has a bifurcated structure.

13.  A microscope according to claim 3, **characterized in that** the support leg comprises at least two rod-like legs (22a, 22b).

14.  A microscope according to claim 1, **characterized in that** the portal support member has a fastening structure to mount various kinds of equipment.

15.  A microscope according to claim 14, **characterized in that** the fastening structure comprises female threads.

16.  A microscope according to claim 14, **characterized by** further comprising a manipulator (81) which is fixed to the portal support member through the fastening structure and manipulates the sample (3).


**Patentansprüche**

1.  Mikroskopsystem aufweisend:

     einen Mikroskopkörper (1);
     einen Objekttisch (2), der am oberen Abschnitt des Mikroskopkörpers (1) vorgesehen ist und auf dem eine Probe (3) angebracht ist;
     eine untere Objektivlinse (5), die unter dem Objekttisch (2) für den Mikroskopkörper (1) angeordnet ist;
     ein unteres Beleuchtungsgerät (7), das für den Mikroskopkörper (1) bereitgestellt ist und die Probe (3) von unten beleuchtet; und
     eine untere Okularlinse (20), die für den Mikroskopkörper (1) vorgesehen ist und ein Beobachtungsbild der Probe (3) von der unteren Objektivlinse (5) erfasst, ferner aufweisend:

          ein Portalträgerelement (22, 24, 25), das auf dem oberen Abschnitt des Mikroskopkörpers (1) so angeordnet ist, dass es den Objekttisch (2) überbrückt;
          eine obere Objektivlinse (29), die auf dem Portalträgerelement über dem Objekttisch (2) angeordnet ist;
          ein oberes Beleuchtungsgerät (30, 50), das auf dem Portalträgerelement angeordnet ist und die Probe (3) von oben beleuchtet; und
          eine obere Okularlinse (41), die auf dem Portalträgerelement vorgesehen ist, und ein Beobachtungsbild der Probe (3) von der oberen Objektivlinse (29), die auf dem Portalträgerelement vorgesehen ist, über eine obere Fokussiereinheit (26) erfasst,

**dadurch gekennzeichnet, dass** das Portalträgerelement (22, 24, 25) den senkrechten Abstand der oberen Objektivlinse (29), des oberen Beleuchtungsgeräts (30, 50) und der oberen Okularlinse (41) vom Objekttisch (2) verstellbar fixiert.

2. Mikroskop nach Anspruch 1, **dadurch gekennzeichnet, dass** das Portalträgerelement mindestens zwei erste Elemente (90, 92; 91, 93) hat, die auf dem Mikroskopkörper (1) senkrecht stehen, und ein zweites Element, das zwischen den ersten Elementen vorgesehen ist, wobei die zwei ersten Elemente (90, 92; 91, 93) längenverstellbar sind.

3. Mikroskop nach Anspruch 2, **dadurch gekennzeichnet, dass** die ersten Elemente vordere und hintere Stützbeine haben, die jeweils untere und obere Abschnitte (90; 92) des vorderen Stützbeins an der Vorderseite des Mikroskopkörpers (1) sowie untere und obere Abschnitte (91; 93) des hinteren Stützbeins an der Rückseite des Mikroskopkörpers (1) enthalten, das zweite Element ein waagrechtes Element (25) hat, das horizontal zwischen den oberen Abschnitten (92; 93) des vorderen und hinteren Stützbeins fixiert ist, und die Stützbeine zwischen den unteren und oberen Abschnitten (90; 92) des vorderen Stützbeins bzw. zwischen den unteren und oberen Abschnitten (91; 93) des hinteren Stützbeins längenverstellbar sind.

4. Mikroskop nach Anspruch 3, **dadurch gekennzeichnet, dass** jeder untere Abschnitt (90; 91) des Stützbeins und obere Abschnitt (92; 93) des Stützbeins sowie das waagrechte Element (55) eine ebene Platte aufweist.

5. Mikroskop nach Anspruch 1, **dadurch gekennzeichnet, dass** das Mikroskop ferner mindestens ein Beobachtungsgerät (42) aufweist, das ein Beobachtungsbild der Probe (3) von der oberen Objektivlinse (29) erfasst, und das obere Beleuchtungsgerät (30, 50), die obere Okularlinse (41) und das Beobachtungsgerät (42) auf dem Portalträgerelement angeordnet sind.

6. Mikroskop nach Anspruch 5, **dadurch gekennzeichnet, dass** das obere Beleuchtungsgerät (30, 50), die obere Okularlinse (41) und das Beobachtungsgerät (42) auf dem Portalträgerelement angebaut und vom Portalträgerelement abgebaut werden können.

7. Mikroskop nach Anspruch 3, **dadurch gekennzeichnet, dass** es ferner eine Fokussiereinheit (26) aufweist, die die obere Objektivlinse (29) entlang einer optischen Achse bewegt, wobei die Fokussiereinheit (26) am oberen Abschnitt (92) des vorderen Stützbeins vorgesehen ist.

8. Mikroskop nach Anspruch 3, **dadurch gekennzeichnet, dass** es ferner eine Fokussiereinheit (26) aufweist, die die obere Objektivlinse (29) entlang einer optischen Achse bewegt, wobei die Fokussiereinheit (26) am oberen Abschnitt (93) des hinteren Stützbeins vorgesehen ist.

9. Mikroskop nach Anspruch 3, **dadurch gekennzeichnet, dass** es ferner eine Fokussiereinheit (26) aufweist, die die obere Objektivlinse (29) entlang einer optischen Achse bewegt, wobei die Fokussiereinheit (26) an einer unteren Oberfläche des waagrechten Elements (25) bereitgestellt ist.

10. Mikroskop nach Anspruch 1, **dadurch gekennzeichnet, dass** es ferner mindestens einen Querverschiebemechanismus (60, 62, 63, 64) aufweist, der eine der unteren Objektivlinse (5) und der oberen Objektivlinse (29) in einer Ebene quer verschiebt, die senkrecht zu einer optischen Achse der zu bewegenden Objektivlinse liegt.

11. Mikroskop nach Anspruch 4, **dadurch gekennzeichnet, dass** das an der Vorderseite des Mikroskopkörpers (1) angeordnete Stützbein (22) ein Sichtfenster (70) hat.

12. Mikroskop nach Anspruch 3, **dadurch gekennzeichnet, dass** das Stützbein eine gegabelte Struktur hat.

13. Mikroskop nach Anspruch 3, **dadurch gekennzeichnet, dass** das Stützbein mindestens zwei stabartige Beine (22a, 22b) aufweist.

14. Mikroskop nach Anspruch 1, **dadurch gekennzeichnet, dass** das Portalträgerelement eine Befestigungsstruktur zum Anbringen verschiedener Arten von Gerätschaften hat.

**15.** Mikroskop nach Anspruch 14, **dadurch gekennzeichnet, dass** die Befestigungsstruktur Innengewinde aufweist.

**16.** Mikroskop nach Anspruch 14, **dadurch gekennzeichnet, dass** es ferner einen Manipulator (81) aufweist, der über die Befestigungsstruktur am Portalträgerelement fixiert ist und die Probe (3) manipuliert.

**Revendications**

**1.** Microscope de système comprenant :

un corps de microscope (1) ;
un étage (2) qui est prévu sur une portion supérieure du corps de microscope (1) et sur lequel un échantillon (3) est placé ;
une lentille d'objectif inférieure (5) prévue en dessous de l'étage (2) pour le corps de microscope (1) ;
un dispositif d'éclairage inférieur (7) qui est prévu pour le corps de microscope (1) et éclaire l'échantillon (3) par le dessous ; et
une lentille d'oculaire inférieure (20) qui est prévue pour le corps de microscope (1) et acquiert une image d'observation de l'échantillon (3) à partir de la lentille d'objectif (5), comprenant en outre :

un élément de portique (22, 24, 25) qui est prévu sur la portion supérieure du corps de microscope (1) de façon à enjamber l'étage (2) ;
une lentille d'objectif supérieure (29) prévue sur l'élément de portique au-dessus de l'étage (2) ;
un dispositif d'éclairage supérieur (30, 50) qui est prévu sur l'élément de portique et éclaire l'échantillon (3) par le dessus ; et
une lentille d'oculaire supérieure (41) qui est prévue sur l'élément de portique et acquiert une image d'observation de l'échantillon (3) à partir de la lentille d'objectif supérieure (29), qui est prévue sur l'élément de portique par l'intermédiaire d'une unité de focalisation supérieure (26), **caractérisé en ce que** l'élément de portique (22, 24, 25) fixe de façon ajustable la distance verticale de la lentille d'objectif supérieure (29), du dispositif d'éclairage supérieur (30, 50) et de la lentille d'oculaire supérieure (41) à l'étage (2).

**2.** Microscope selon la revendication 1, **caractérisé en ce que** l'élément de portique comporte au moins deux premiers éléments (90, 92 ; 91, 93) qui se dressent sur le corps de microscope (1) et un deuxième élément prévu entre les premiers éléments, chacun des deux premiers éléments (90, 92 ; 91, 93) étant ajustable en longueur.

**3.** Microscope selon la revendication 2, **caractérisé en ce que** les premiers éléments comportent des jambes support avant et arrière qui incluent respectivement des portions inférieures et supérieures (90 ; 92) de jambes support avant au niveau d'un côté avant du corps de microscope (1) et des portions inférieures et supérieures (91 ; 93) de jambes support arrière au niveau d'un côté arrière du corps de microscope (1), le deuxième élément comporte un élément horizontal (25) fixé horizontalement entre les portions supérieures (92 ; 93) de jambes support avant et arrière, et les jambes support sont respectivement ajustables en longueur entre les portions inférieures et supérieures (90 ; 92) de jambes support avant et entre les portions inférieures et supérieures (91 ; 93) de jambes support arrière.

**4.** Microscope selon la revendication 3, **caractérisé en ce que** chacun parmi les portions inférieures (90 ; 91) de jambes support et les portions supérieures (92 ; 93) de jambes support ainsi que l'élément horizontal (25) comprend une plaque plane.

**5.** Microscope selon la revendication 1, **caractérisé en ce que** le microscope comprend en outre au moins un dispositif d'observation (42) qui détecte une image d'observation de l'échantillon (3) à partir de la lentille d'objectif supérieure (29), et **en ce que** le dispositif d'éclairement supérieur (30, 50), la lentille d'oculaire supérieure (41) et le dispositif d'observation (42) sont prévus sur l'élément de portique.

**6.** Microscope selon la revendication 5, **caractérisé en ce que** le dispositif d'éclairage supérieur (30, 50), la lentille d'oculaire supérieure (41) et le dispositif d'observation (42) peuvent être montés sur l'élément de portique et démontés de l'élément de portique.

**7.** Microscope selon la revendication 3, **caractérisé par** ce qu'il comprend en outre une unité de focalisation (26) qui déplace la lentille d'objectif supérieure (29) le long d'un axe optique, l'unité de focalisation (26) étant prévue sur la portion supérieure (92) de jambe support avant.

8. Microscope selon la revendication 3, **caractérisé par** ce qu'il comprend en outre une unité de focalisation (26) qui déplace la lentille d'objectif supérieure (29) le long d'un axe optique, l'unité de focalisation (26) étant prévue sur la portion supérieure (93) de jambe support arrière.

9. Microscope selon la revendication 3, **caractérisé par** ce qu'il comprend en outre une unité de focalisation (26) qui déplace la lentille d'objectif supérieure (29) le long d'un axe optique, l'unité de focalisation (26) étant prévue sur une surface inférieure de l'élément horizontal (25).

10. Microscope selon la revendication 1, **caractérisé par** ce qu'il comprend en outre au moins un mécanisme de décalage transversal (60, 62, 63, 64) qui décale transversalement l'une de la lentille d'objectif inférieure (5) et de la lentille d'objectif supérieure (29) dans un plan perpendiculaire à un axe optique de la lentille d'objectif à déplacer.

11. Microscope selon la revendication 4, **caractérisé en ce que** la jambe support (22) prévue sur le côté avant du corps de microscope (1) comporte une fenêtre de visualisation (70).

12. Microscope selon la revendication 3, **caractérisé en ce que** la jambe support présente une structure jumelée.

13. Microscope selon la revendication 3, **caractérisé en ce que** la jambe support comprend au moins deux jambes en forme de tige (22a, 22b).

14. Microscope selon la revendication 1, **caractérisé en ce que** l'élément de portique comporte une structure de fixation pour monter divers types d'équipement.

15. Microscope selon la revendication 14, **caractérisé en ce que** la structure de fixation comprend des filets femelle.

16. Microscope selon la revendication 14, **caractérisé par** ce qu'il comprend en outre un manipulateur (81) qui est fixé sur l'élément de portique par l'intermédiaire de la structure de fixation et manipule l'échantillon (3).

FIG.1

F I G. 2

Cantilever beam

$y=Wx^3/3EI$
$\theta=Wx^2/2EI$

Fixed-fixed beam

$y=Wx^3/24EI$
$\theta=0$

F I G. 3

F I G. 4

FIG. 5

FIG. 6

FIG.7

FIG.8

FIG. 9

FIG.10

FIG.11

FIG.12

F I G. 1 3

F I G. 1 4

25

80

22

80 80

2

1

21

# FIG.15

25

89 89

88 88

22

2

1

21

# FIG.16

**FIG.17**

**FIG.18**

**EP 1 582 904 B1**

## REFERENCES CITED IN THE DESCRIPTION

### Patent documents cited in the description

- JP 5005330 A
- JP 10090604 A
- JP 11218683 A
- JP 2003270537 A